# EUROPEAN PATENT APPLICATION

(11) **EP 4 410 739 A1**
(43) Date of publication of application: **07.08.2024**
(21) Application number: 24170608.4
(22) Date of filing: 25.11.2020
(51) Int. Cl.: C01B 3/04, B01D 53/24, B01D 63/10, B04B 5/04, B04B 5/08, B04B 15/02, C01B 3/50, C01B 13/02

(54) **THERMAL INVERTER BOX**

(62) Divisional of application: 23151502.4
(71) Applicant: TI-Holdings B.V., 1105 BM Amsterdam (NL)
(72) Inventor: Koekkoek, Rudolf, 1105 BM Amsterdam (NL); Vechik, Terence, 1105 BM Amsterdam (NL)
(74) Representative: PPR AG

(57) **Abstract**

The invention relates to a thermal inverter (1, 2) for generating from a parent compound a first fluid of first molecules (H₂) with a first molecular weight and a second fluid of second molecules (O₂) with a second molecular weight, whereby the first molecular weight of the first molecules (H₂) is less than the second molecular weight of the second molecules (Oz). In a reaction device (1) the parent compound is decomposed into a mixture compound of the first molecules (H₂) and the second molecules (O₂). In order to improve the efficiency of such a thermal inverter the invention proposes a gas separator device (2) comprising a mixture inlet (26) for the mixture compound of the first and the second molecules at a bottom section (24) of the gas separator device (2) and a first (27) and a second outlet (28) at a top section (25) of the gas separator device (2), the first outlet (27) providing substantially the first molecules (H₂) and the second outlet (28) providing substantially the second molecules (O₂), the gas separator device (2) further comprising guiding elements (6) for guiding the first and second molecules (H₂, O₂) from the mixture inlet (26) towards the first and second outlet (27, 28) in a coiled path, wherein the coiled path is confined by a sidewall (29).

## Description

### Technical field of the invention

The invention relates to a thermal inverter for generating from a parent compound a first fluid of first molecules with a first molecular weight and a second fluid of second molecules with a second molecular weight, whereby the first molecular weight of the first molecules is less than the second molecular weight of the second molecules, the thermal inverter comprising a reaction device for splitting a fluid into a compound of the first molecules and the second molecules and a gas separator device.

The invention further relates to a gas separator.

The invention also relates to a procedure for generating hydrogen and oxygen gas.

### PRIOR ART

From WO 2005/005009 A2 a radiant energy transfer reactor is known, into which water molecules, preferably in the form of steam or water vapor is introduced. The radiant energy is absorbed by the molecules which dissociate into hydrogen and oxygen. In a separation step a time variant magnetic field is used to cause a rotation of the dissociated hydrogen and oxygen and enhancing the separation of hydrogen and oxygen due to a centrifugal effect by the magnetic field. The hydrogen gas may be pumped into storage tanks for use elsewhere or used for powering fuel cells or combusted for other equipment proximate to the reactor.

CN200610009659A discloses a helical pipe composite gas-liquid separator in vertical structure consists of a gas collecting part, a helical centrifugal separating part and a liquid collecting part. A fluid entering to the helical pipe in the helical separating part generates a centrifugal acceleration. Under the common action of the centrifugal force and the gravitational force, the liquid with great density aggregates to the lower part of the pipeline while gas aggregates in the upper part before being exhausted through the upper holes in the helical pipe. Under the condition of lower gas content in the fluid or relatively small fluid flow rate, the fluid is separated mainly on the gas collecting part and the liquid is collected mainly in the liquid collecting part.

### SUMMARY OF THE INVENTION

The efficiency of the gas separator is crucial for the efficiency of the thermal inverter. It is therefore an object of the invention to improve the efficiency of the gas separator.

The invention proposes a thermal inverter for generating a first fluid of first molecules with a first molecular weight and a second fluid of second molecules with a second molecular weight, whereby the first molecular weight of the first molecules is less than the second molecular weight of the second molecules. The thermal inverter comprises a reaction device for splitting a fluid into a compound of the first molecules and the second molecules. The thermal inverter further comprises a gas separator device comprising a mixture inlet for the compound of the first and the second molecules at a bottom section of the gas separator device and a first outlet providing substantially the first molecules and a second outlet providing substantially the second molecules. The first outlet is located at a top section of the gas separator. The gas separator device further comprises guiding elements for guiding the first and second molecules from the mixture inlet towards the first and second outlet in a coiled path, wherein the coiled path is confined by sidewall which shape the coiled path such that its diameter increases from the mixture inlet to the outlets.

The use of a spiral forces the compound of the lighter molecules and the heavier molecules into a spiral trajectory. This spiral trajectory imposes a radial movement of the molecules, which subjects the molecules to a centrifugal force. As the centrifugal force is a function of the mass and the radius, the second molecules, i.e. the molecules with a greater molecular mass are subjected to a larger centrifugal force than the first molecules which have lesser molecular mass than the second molecules. As a consequence, the molecules with the higher molecular mass, are separated from the molecules with the lesser molecular mass, as the molecules with the higher molecular mass are stronger accelerated radially outwards from the imaginary axis of the spiral than the molecules with the lesser molecular mass. As the diameter of the spiral flares, *i.e.* the diameter is growing bigger with the distances from the mixture inlet this effect is intensified, as with a flaring diameter the centrifugal force increases due to the growing radius the molecules with the higher molecular mass are allowed to take.

As the molecules with the lighter molecular mass stay predominantly along the imaginary axis of the spiral, they can be collected at an outlet that is coaxial with the imaginary axis of the spiral, opposite to the mixture inlet. Conversely, the molecules with the higher molecular mass are predominantly at the sidewalls of the gas separator and can be collected from there by an outlet that is located at the sidewalls and ideally farthest away from the mixture inlet.

In another aspect of the invention the coiled path in radial direction is an ellipse.

It has been noticed that when the gas separator has an elliptical cross section with regard to the imaginary axis of the spiral, the acceleration effect is increased.

In another aspect of the invention the eccentricity of the ellipse, i.e. the ratio between the longer axis of the ellipse and the shorter axis of the ellipse, is preferably greater than 1.5.

In another aspect of the invention the reaction device comprises a gas generator with an inlet for the fluid in liquid phase and an outlet for the fluid in a gaseous phase.

In another aspect of the invention a gas separator unit comprises a plurality of gas separator devices, each comprising a single inlet and a first and a second outlet, wherein the first outlet of one gas separator device is connected to the inlet of a succeeding gas separator device and the outlets of the second outlets of each gas separator device are connected to a collecting tube.

The gas separator may only achieve a certain ratio of gas separation. Some of the collected molecules with a lower molecular weight still may contain molecules with a higher molecular weight. By concatenating more than one gas separator therefore improves the purity of the fluid with the molecules of the lower molecular weight from stage to stage. Depending on the purity needed for a certain purpose the gas separator unit may comprise two gas separator modules, three gas separator units or even more.

In one embodiment of the invention the reaction device not only includes the gas reactor but also a gas generator. In case the parent compound is present in a liquid phase, the liquid parent compound is heated in the gas generator so that it is converted in a gas phase. In case of water as a parent compound, the gas generator is a steam generator which produces steam from the liquid water.

Additionally, or alternatively the reaction device further comprises a gas superheater with an inlet for the parent compound in the gaseous phase at a bottom end of the gas generator and an outlet for the fluid in a supercritical condition at a top end of the gas generator. The gas superheater raises the temperature of the fluid in the gaseous phase above the critical point. In case of water as a fluid the gas superheater is a steam superheater which increases the temperature of the steam to a temperature where the steam is superheated.

In one aspect of the invention the gas generator, the gas superheater and the reaction device are combined in a converter unit which is commonly heated by the heat source and all structural the same. The distinction between gas generator, gas superheater and reaction device is a function of the temperature a part of the converter unit is experiencing, as the temperature is higher to parts of the converter unit that are closer to the heat source than for parts of the converter unit that are farther away from the heat source. The gas generator will be in fluid connection with a fluid reservoir which contains the parent compound. As for converting the parent compound into gas a lower temperature is sufficient than for superheating the gasified fluid into a superheated fluid this part of the converter unit, is located where the converter unit receives the less heat, usually the part that is the most distant to the heat source. As the reaction device requires the highest temperature that is available, the part of the converter unit that is closest to the heat source will become the reaction device and therefore the outlet of the reaction device should be chosen close to the heat source. As a logical consequence the part of the converter unit that serves as the gas superheater will be located in between the gas generator and the reaction device where it is exposed to a lesser temperature than the reaction device, but at a higher temperature than the gas generator.

In another aspect of the invention the gas generator or the gas superheater is comprised of a lattice connecting tubes for circulating the fluid received at the inlet of the gas generator or the gas superheater to the outlet of the gas generator or the gas superheater. The lattice of tubes comprises one inlet and one outlet, where the outlet is placed closest to the heat source.

In another aspect of the invention a coil is arranged at or in the vicinity of the end of the exit pipes of the gas separator.

The coil is used to create an electro-magnetic field where the exit tubes of the gas separator are located. This electro-magnetic field accelerates the first and the second molecules from the inlet towards the outlets and by this improves the efficiency of the gas separator.

In another aspect of the invention a thermo-electric generator (TEG) is arranged between a water reservoir and the gas generator. Preferably the TEG is specially designed for high temperature resistance, particularly for temperatures up to 600 °C.

This thermo-electric generator is for example a Seebeck generator element which produces an electric current as a function of the temperature difference between a top plane and a bottom plane of the Seebeck generator. In a preferred embodiment the power produced by the thermo-electric generator is used to power the coils for generating the electro-magnetic field.

An application of the invention is a combustion engine for the combustion of either the first stream of first molecules or the second stream of second molecules, as a function whether the combustible molecules are the first molecules or the second molecules. In a preferred embodiment the combustion engine is in close proximity of the thermal inverter, *i.e.* is connected with its manifold to the outlet of the reaction device that provides the combustible molecules. In case water is the chosen liquid to be split into hydrogen and oxygen, the combustible molecules are the hydrogen molecules, *i.e.* the molecules with the lower molecular weight compared to the oxygen molecules.

Another application of the invention is in a thermal waste treatment process for the combustion of substances contained in waste materials for cleaning the flue gases.

In another aspect of the invention the heat produced by the combustion is transferred to at least of one of the gas generators or the gas superheater.

In this case the waste energy produced by the combustion engine may be re-used. It may be reused to pre-heat the fluid in the fluid reservoir or to provide heat to the gas generator, the gas superheater or the reaction device.

In another aspect of the invention the parent compound is water and the first molecules are hydrogen molecules and the second molecules are oxygen molecules, in which case the combustible molecules are the hydrogen.

In another aspect of the invention the parent compound is ammonia NH₃.

In another aspect of the invention a method for generating hydrogen and oxygen gas comprises the steps of exposing water to a first heat source for generating steam; exposing the steam to a second heat source for superheating the steam into supercritical steam; guiding the supercritical steam into a spiral trajectory with widening diameter for forcing the oxygen molecules (Oz) radially outwards and collecting the hydrogen molecules (H₂) at the end of the trajectory.

These and other objects, advantages and features of the invention will become readily apparent from the following description of a preferred embodiment when read in conjunction with the attached drawing and appended claims.

### DETAILED DESCRIPTION

Reference will now be made to the example embodiments illustrated in the drawings, and specific language will be used herein to describe the same. It will nevertheless be understood that no limitation of the scope of the disclosure is thereby intended. Alterations and further modifications of the features illustrated herein, and additional applications of the principles illustrated herein, which would occur to one skilled in the relevant art and having possession of this disclosure, are to be considered within the scope of the disclosure.
- Fig. 1: shows an overview of an arrangement for splitting water into hydrogen molecules and oxygen molecules and a gas separator for separating these molecules;
- Fig. 2: shows an arrangement with three gas separator devices;
- Fig. 3: shows a cross section of a gas exchanger;
- Fig. 4: shows a cross section of a gas superheater / reactor device;
- Fig. 5: shows a three-dimensional view of a reactor module;
- Fig. 6: shows a three-dimensional view of a thermal inverter;
- Fig. 7: shows a three-dimensional view of a thermal inverter from a different angle;
- Fig. 8: shows the thermal inverter as a wire-frame.

The invention is intended to improve the efficiency of separation of hydrogen molecules and oxygen molecules in a gas separator module 2. It is well known that water, respective water steam can be split in a chemical reaction into hydrogen molecules and oxygen molecules:

2 H₂0 → 2 H₂+O₂

As this an exothermic reaction heat has to be added in order to make this chemical reaction happen. In case of electrolysis this may be in form of electric current. If the temperature is sufficiently high this reaction may happen by adding heat alone, which is called in general a thermolysis. In recent years various technologies have been developed by use of catalysts to reduce the temperature of the thermolysis of water.

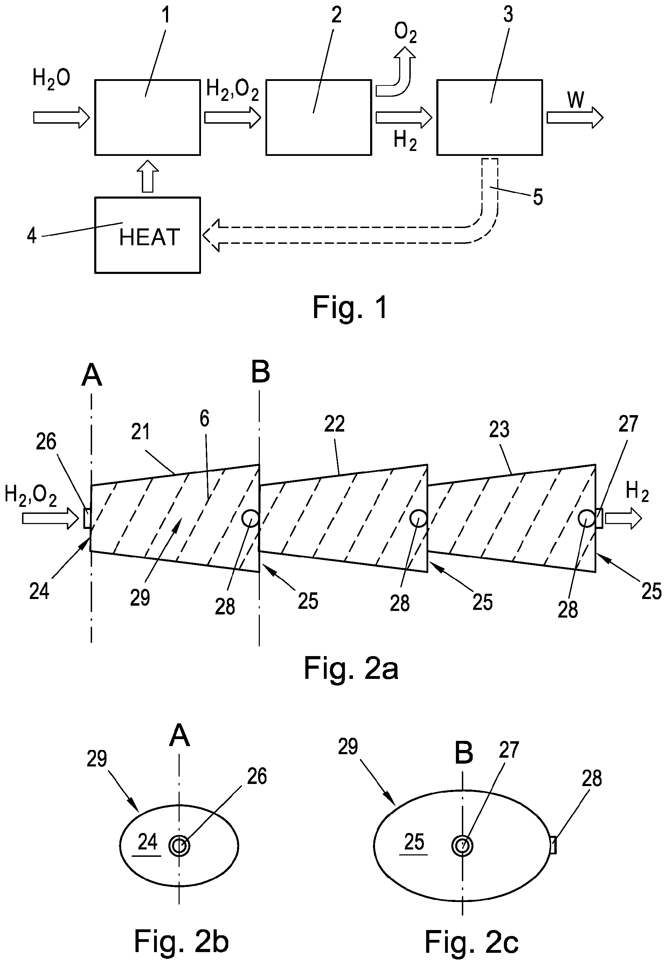

Figure 1 shows an overview of an embodiment of the invention. In the present embodiment a thermolysis device 1is provided with heat from a heat source 4. The heat source 4 may be under-utilized heat of a chemical plant, an incinerator for waste disposal, or other sources. The heat is used to warm up water until it boils and changes its phase from a liquid to steam, and to further heat the steam until it reaches the temperature where the process of the decomposition of steam into its molecular components' hydrogen H₂ and oxygen O₂ starts.

The mixture of hydrogen molecules H₂ and oxygen molecules Oz is then let to the gas separator module 2. The gas separator module 2 separates the oxygen molecules Oz from the hydrogen molecules H₂. The hydrogen molecules H₂ may be collected and compressed to store them a compressed gas in a reservoir, such as a gas bottle. This would allow for transporting the gas bottles with the compressed hydrogen to a location where the hydrogen is needed, for example as a fuel. In this embodiment, the hydrogen molecules H₂ are supplied as fuel, or as an additive to another fuel to an internal combustion engine 3. The internal combustion engine 3 is for example a conventional four-stroke engine which produces work W. As any other gas or gasoline engine, this engine produces under-utilized heat 5, which usually is not used and which may be transferred to the heat source 4 or alternatively be used as a second heat source for prewarming the water used in the thermolysis device 1.

We turn now to Fig. 2a which shows the gas separator device 2 in a side view. In this embodiment the gas separator device 2 is composed of a first gas separator module 21, a second gas separator module 22, and a third gas separator module 23. In this embodiment the first, the second and the third gas separator module 21, 22, 23 are of identical build. Each gas separator module 21, 22, 23 has the shape of a truncated cone, or to be more precise a conical frustum with a bottom side 24 and a top side 25, which are parallel to each other. In contrast to the usual terminology, when the areas of the bottom side 24 and the top side 25 are compared, the bottom side 24 is the side with the smaller area. This terminology is used because in this application of a gas separator modules 21, 22, 23 the inlet for the mixture of hydrogen and oxygen molecules H₂, O₂, the mixture inlet, is on the plane with the smaller area, at the left-hand side in the drawings, *i.e.* the bottom side 24. The top side 25 of the conical frustum accommodates for the hydrogen outlet 27 which is on the right-hand side of each gas separator module 21, 22, 23 in the drawings, which can be only seen for the third gas separator module 23, as the hydrogen outlet of the first and second gas separator modules are concealed in Fig. 2a.

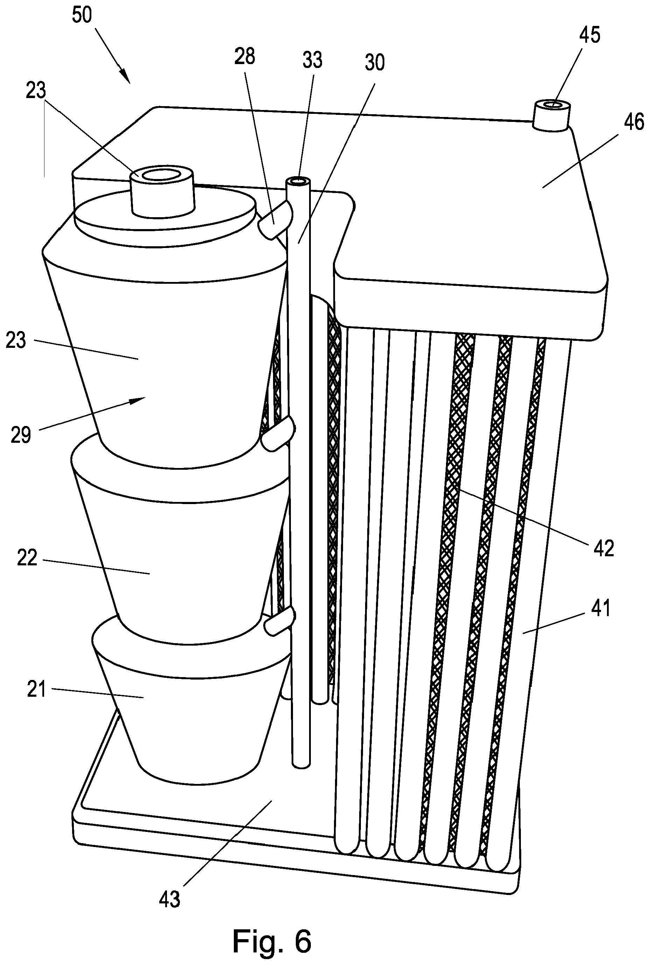

The first gas separator module 21, the second gas separator module 22, and the third gas separator module 23 are arranged in series, *i.e.* the mixture inlet 26 of the second gas separator module 22 is connected to the hydrogen outlet 27 of the first gas separator module 21 and the mixture inlet 26 of the third gas separator module 23 is connected to the hydrogen outlet 27 of the second gas separator 22. Due to this arrangement the mixture of the decomposed hydrogen molecules H₂ and the oxygen molecules Oz flows in Fig. 2a from the left-hand side to the right-hand side of the drawings. Each oxygen outlet 28 of the first gas separator module 21, the second gas separator module 22, and the third gas separator module 23 are connected by an oxygen collection tube 30. For reasons of clarity the oxygen collection tube is not shown in Fig. 2a, but is shown in Fig. 6. The distance between a bottom area 24 and a top area 25 of each conical frustum is about 90mm, so that the length of the gas separator device 2, comprising three gas separator modules 21, 22, 23 is about 270mm in total. These dimensions are an example for an application where the thermal inverter / gas separator unit supplies an internal combustion engine. It is evident that these dimensions vary with the power of the selected engine and may be smaller for smaller engines and larger for more powerful engines.

Each conical frustum of the gas separator modules 21, 22, 23 comprises inside the conical frustum guiding elements 6. The guiding elements 6 may consist of a single guiding element, or may be composed of a plurality of guiding elements 6. Effectively the guiding elements 6 form a spiral which extends from the gas mixture inlet 24 to the hydrogen outlet 27 of each gas separator module 21, 22, 23. The spiral is not rotating but is fixed to the inner walls of the conical frustum. As the inner wall is confining the spiral, a gas mixture, which is entered at the gas mixture inlet 26 is forced by the gas pressure along the path of the spiral towards the hydrogen outlet 27 and the oxygen outlet 28 and cannot bypass the spiral along the inside of sidewall 29.

A mixture of gas molecules H₂, O₂ which enters at the mixture inlet 26 of a gas separator module 21is accelerated by the pressure. The gas mixture is forced in direction of the lower pressure, which is towards the hydrogen outlet 27 and the oxygen outlet 28. As there is no straight way towards the outlets 27, 28, the gas molecules of the gas mixture are forced to follow the spiral 6. This forces the gas molecules in a rotation around an imaginary axis of the spiral 6 and exerts a centrifugal force on each gas molecule. As a centrifugal force is proportional to the mass of an accelerated object, the oxygen molecules O₂ with an atomic mass of thirty-two are accelerated sixteen times more than the hydrogen molecules H₂ with an atomic weight of two. The oxygen molecules therefore are accelerated by the centrifugal force radially away from the imaginary axis of the spiral, i.e. in direction of the sidewall 29 of the gas separator, whereas the hydrogen molecules H₂, in relation to the oxygen molecules Oz stay closer to the imaginary axis of the spiral. Therefore, the spiral separates the gas mixture H₂, O₂ that gas molecules close to the sidewall 29 of the gas separator 21are substantially oxygen molecules Oz, and gas molecules close to the imaginary axis of the spiral are substantially hydrogen molecules H₂. Thus, the gas molecules exiting trough the hydrogen outlet 27, which is in the centre of the top side are substantially hydrogen molecules H₂, and gas molecules exiting the oxygen outlet 28, which is at the sidewall 29 with the largest diameter.

In real world applications the separation of the gas molecules may not be as perfect as in theory, the gas molecules exiting the hydrogen outlet 27 still may contain a certain percentage of oxygen molecules Oz. To further extract the remaining oxygen molecules in order to purify the gas mixture, the present embodiment proposes a second gas separator 22, and if needed further gas separators 23 in succession. At each stage more and more oxygen molecules Oz are removed so that at the hydrogen outlet 27 of the last stage the hydrogen molecules are available in the targeted purity.

In order to improve the efficiency of the separation, in the present embodiment the sidewall 29 of the gas separator is not a perfect circle but is an ellipse. An ellipse has a small axis and perpendicular to the small axis a long axis. When the gas molecules are forced along the elliptical conical spiral 6 each time, they pass the smaller axis of the elliptical cross section, they are additionally accelerated towards the longer axis of the elliptical cross section in front of them. In the present embodiment the smaller axis of the elliptical cross section at the bottom side 24 is 40mm and the longer axis of the elliptical cross section is 60mm. At the top side 25 of each gas separator 21, 22, 23 the smaller axis is 60mm and the longer axis is 90mm. This results in an eccentricity ratio of 60mm divided by 40mm and 90mm divided by 60mm, which is 1.5 for both cross sections. In the present embodiment this ratio is uniform along the central axis of the conical frustum. In this embodiment the eccentricity ratio is the same for all three stages, *i.e.* the first gas separator device 21, the second gas separator device 22, and the third gas separator device 23.

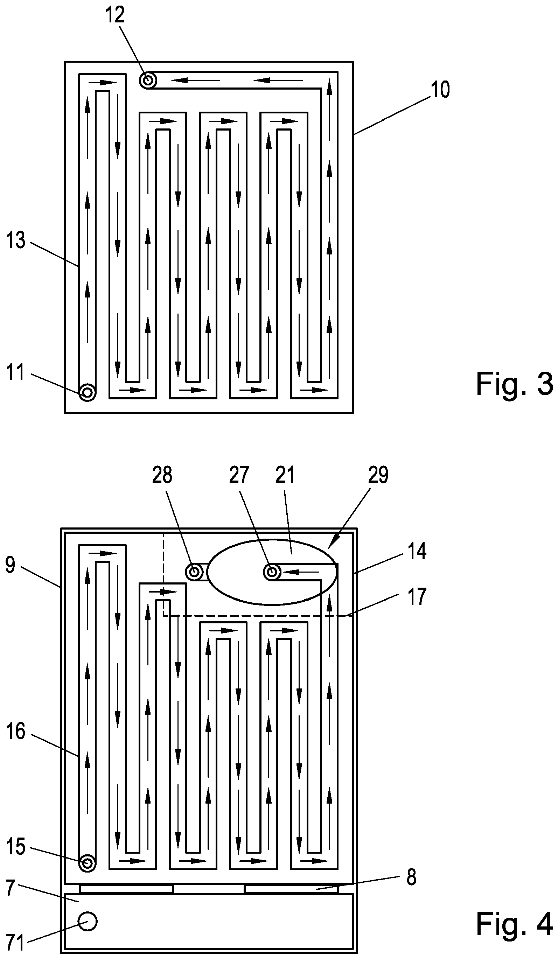

Fig. 3 shows a cross section of a gas generator 10. A tube 13 is wound in serpentines from the fluid inlet 11 to the gas outlet 12 forming a lattice. As this is a cross section only one layer of lattice is visible and the drawing shows an arrangement of the tubes for only one stack. However, the gas generator 10 comprises a plurality of lattices, one stacked behind each other. With more than one stack the tube 13 at the end 12 of one stack has to be connected with the inlet 11 of the next stack. Ideally the number of stacks is chosen such that sufficient energy is introduced to the gas generator 10 in order to heat up the fluid entering through the fluid inlet 11 so a temperature that changes the phase of the fluid to a gas at the gas outlet 12.

Fig. 4 shows a gas superheater / reactor device 14 with a similar structure. A lattice of tubes 16 extends from a gas inlet 15 to the mixture inlet 26 of the gas separator 21. When stacked together the tubes form a cube. In this embodiment the tubes 16 are arranged such that they create a recess 17, which accommodates the gas separator 21. The gas generator / gas superheater / reactor devices are contained in a common housing 9. The housing 9 further contains a water reservoir 7 with a water refill inlet 71. Between the water reservoir 7 and the superheater / reactor device 14 are arranged thermoelectrical generator pads 8. Due to the high temperature difference between the water reservoir 7 and the gas superheater / reactor device 14 the thermoelectrical generator pads 8 can produce considerable electrical power. This power may be applied directly, or after conversion to a suitable voltage to create an electrostatic field in the gas separator 21, 22, 23. For this purpose the bottom section 24 of the gas separator must be insulated from the top section 25 of the gas separator. The output voltage of the thermoelectrical generator pads 8, or voltage converter respectively is applied to the bottom section 24 and the top section 25. The electrostatic field in addition accelerates the gas molecules.

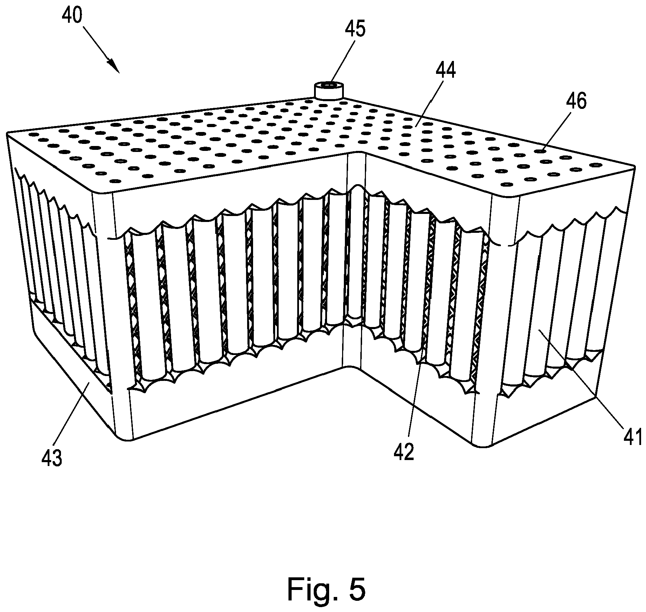

Fig. 5 shows in an alternative embodiment a reactor module 40 to build a gas generator / gas superheater / reactor device with tubes 41 which are orientated in parallel, in the drawing from the bottom-side to the topside. The tubes 41are thermally connected by a connecting grid 42. At the lower end of the drawing the tubes 41extend into a bottom plate 43 and on the upper side of the drawing the tubes 41 extend into a top plate 44. In case the reactor module is a bottom module the bottom plate 43 comprises channels, which cannot be seen in the drawings, which connect two neighboured tubes 41. In case the reactor module 40 is an intermediate module the tubes 41 extend in the bottom plate into through holes. A bottom module and an intermediate module both have a top plate 44 with through holes 46 which allow the fluids in the tubes 41to pass to another module which may be placed on top of the reactor module 40. This maybe a top module, which mirrors the bottom module, i.e. the bottom plate 43 has through holes and the top plate has channels to connect a pair of tubes such that the tubes of the whole a gas generator / gas superheater / reactor device circulates in a serpentine through all tubes 41. With this modular design the gas generator / gas superheater / reactor device can be adopted to a size that corresponds with the available heat and the desired output of split gas molecules.

Another embodiment of the gas generator / gas superheater / reactor device 50 is shown in Fig. 6. In contrast to the reactor modules, it is built as non-modular. In this embodiment the tubes 41 run from the bottom plate 43 to the top plate 46. Similar to the previous embodiment the top plate 46 and the bottom plate 43 provide channels which connect each pair of neighboured tubes 41 such that the tubes 41 form a single serpentine with one fluid inlet and one mixture outlet. The mixture outlet is concealed in this drawing and is below the first gas separator module 21. In this embodiment three gas separator modules 21, 22, 23 are connected in line. The last gas separator modules comprise the hydrogen outlet 27. The oxygen outlets 28 end in the oxygen collection tube 33.

In one of the applications of the invention is the use of the produced hydrogen H₂ in a combustion engine. As it is known, when hydrogen is combusted with air, it burns with the oxygen contained in the air to water, so that it is environmentally friendly.

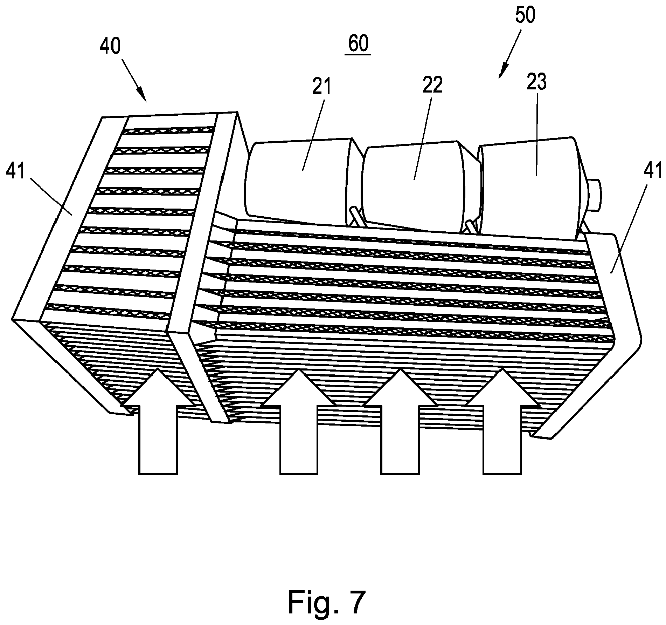

Fig. 7 shows a gas generator / gas superheater / reactor device 60, or thermal inverter 60 which is composed of a gas generator device 40 and a gas superheater / reactor device 50. The superheater / reactor device 50 comprises a recess dimensioned to accommodate the gas separator modules 21, 22, 23 fit. This type of construction allows for an optimized use of space and avoids at the same time that heat is wasted. Figure 7 shows an application of the thermal inverter 60 in a combustion engine. In Fig. 7 the bottom of the thermal inverter 60 is placed on top of an exhaust manifold of a combustion engine. The arrows show the exhaust gases flowing from the exhaust manifold into the thermal inverter 60, through the lattice of tubes 41, 51 to the top of the thermal inverter 60. The thermal inverter 60 is enclosed by a housing, which is not shown for reasons of clarity. The housing has inlets on the bottom side which match openings of the exhaust manifold and has outlets, which match openings of an exhaust collector manifold, which is placed on top of the thermal inverter. The housing 9 ensures that the under-utilized heat of the exhaust gas of the combustion engine is guided into the thermal inverter 60.

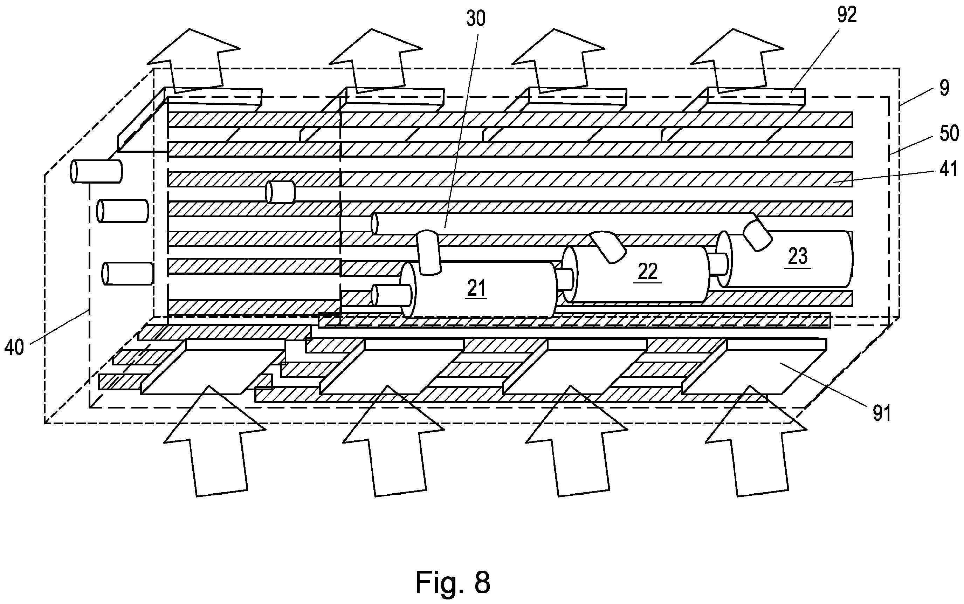

Fig. 8 shows the thermal inverter from a similar angle as in Fig. 7, but with wire frames indicating the housing 9 of the thermal inverter 1,2.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not to be limited to the examples and designs described herein but is to be accorded the widest scope consistent with the principles and novel features disclosed herein.

## Claims

1. A thermal inverter (1, 2) for generating from a parent compound a first fluid of first molecules (H₂) with a first molecular weight and a second fluid of second molecules (Oz) with a second molecular weight, whereby the first molecular weight of the first molecules (H₂) is less than the second molecular weight of the second molecules (Oz), the thermal inverter comprising:
- a reaction device (1) for splitting the parent compound into a mixture compound of the first molecules (H₂) and the second molecules (Oz);
- a frustoconical gas separator device (2) comprising a mixture inlet (26) for the mixture compound of the first and the second molecules at a bottom section (24) of the gas separator device (2) and a first and a second outlet (27, 28) at a top section (25) of the gas separator device (2), the first outlet (27) providing substantially the first molecules (H₂) and the second outlet (28) providing substantially the second molecules (O₂), the gas separator device (2) further comprising guiding elements (6) extending from the mixture inlet (24) to the first and second outlets (27, 28) for guiding the first and second molecules (H₂, O₂) from the mixture inlet (26) towards the first and second outlet (27, 28) in a coiled path, wherein the coiled path is confined by a sidewall (29).

2. Thermal inverter (1,2) according to claim 1, wherein the diameter of the coiled path increases from the mixture inlet (26) to the outlets (27, 28).

3. A thermal inverter (1, 2) according to claim 1 or 2 wherein the shape of the coiled path in radial direction is an ellipse, particularly wherein the eccentricity of the ellipse preferably is greater than 1.5.

4. A thermal inverter (1, 2) according to one of the previous claims, the reaction device (1) further comprising a gas generator with an inlet for the parent compound in liquid phase and an outlet for the parent compound in a gaseous phase.

5. A thermal inverter (1, 2) according to claim 4, wherein the inlet of the gas generator is in fluid connection with a fluid reservoir (7) containing the parent compound.

6. A thermal inverter (1,2) according to one of claims 1 to 4, wherein a coil is arranged at the top section (25) of the gas separator or in the vicinity of exit pipes of the gas separator (2).

7. A thermal inverter (1,2) according to claim 6, wherein a thermoelectric generator (8) is placed in between the fluid reservoir (7) and the thermal inverter, wherein the electric power produced by the thermoelectric generator is used to generate the electric charge applied to the coil for generating an electro-magnetic field.

8. A thermal inverter (1, 2) according to one of the previous claims, the reaction device (1) further comprising a gas superheater with an inlet for the parent compound in the gaseous phase and an outlet for the parent compound in a supercritical condition.

9. A thermal inverter (1, 2) according to claim 8, wherein the gas generator, the gas superheater and the reaction device are combined in a converter unit which is commonly heated by the heat source (4).

10. A thermal inverter (1, 2) according to one of claims 8 to 9, wherein the gas generator or the gas superheater is comprised of a lattice of connecting tubes for circulating the fluid received at the inlet of the gas generator or the gas superheater to the outlet of the gas generator or the gas superheater.

11. A thermal inverter (1, 2) according to one of the previous claims, wherein a gas separator unit comprises a plurality of gas separator devices (21, 22, 23), each comprising a single inlet and a first and a second outlet, wherein the first outlet of one gas separator device is connected to the inlet of a succeeding gas separator device and the outlets of the second outlets of each gas separator device are connected to a collecting tube (30).

12. A frustoconical gas separator device (2) for separating a mixture compound a first molecules (H₂) with a first molecular weight and second molecules (Oz) with a second molecular weight, whereby the first molecular weight of the first molecules (H₂) is less than the second molecular weight of the second molecules (O₂), the gas separator (2) comprising a mixture inlet (26) for the mixture compound of the first and the second molecules at a bottom section (24) of the gas separator device (2) and a first and a second outlet (27, 28) at a top section (25) of the gas separator device (2), the first outlet (27) providing substantially the first molecules (H₂) and the second outlet (28) providing substantially the second molecules (Oz), the gas separator device (2) further comprising guiding elements (6) extending from the mixture inlet (26) towards the first and second outlet (27, 28) for guiding the first and second molecules (H₂, O₂) in a coiled path, wherein the coiled path is confined by a sidewall (29).

13. Arrangement of a thermal converter (1,2) according to one of claims 1 to 11 and a combustion engine (3) for the combustion of a first stream of first molecules (H₂), wherein the first outlet (27) of the thermal inverter (1,2) is connected to a manifold of the combustion engine (3).

14. Arrangement according to claim 13, wherein the heat produced by the combustion engine (3) is transferred to at least of one of the gas generator (10) or the gas superheater of the thermal converter (1, 2).

15. A method to generate hydrogen and oxygen gas comprising the steps of:
- exposing water to a first heat source for generating steam;
- exposing the steam to a second heat source for superheating the steam into supercritical steam and converting the supercritical steam into a mixture of hydrogen (H₂) and oxygen (Oz) molecules by thermolysis;
- guiding, using guiding elements (6) extending from a mixture inlet (24) to first and second outlets (27, 28), the hydrogen (H₂) and oxygen (Oz) molecules into a spiral trajectory with widening diameter for forcing the oxygen molecules (Oz) radially outwards;
- collecting the hydrogen molecules (H₂) at the first outlet (27) at the end of the trajectory.
